Europäisches Patentamt

European Patent Office

Office européen des brevets

(19)

(11) Numéro de publication : **0 505 298 A1**

(12) # DEMANDE DE BREVET EUROPEEN

(21) Numéro de dépôt : **92430005.6**

(22) Date de dépôt : **20.02.92**

(51) Int. Cl.⁵ : **B23B 3/26,** B23Q 9/00

(30) Priorité : **22.03.91 FR 9103823**

(43) Date de publication de la demande :
**23.09.92 Bulletin 92/39**

(84) Etats contractants désignés :
**BE CH DE ES GB LI SE**

(71) Demandeur : **COMPAGNIE MARITIME D'EXPERTISES**
**36, Boulevard des Océans**
**F-13275 Marseille Cédex 9 (FR)**

(72) Inventeur : **François, Daniel**
**20, Avenue de la Soude**
**F-13009 Marseille (FR)**

(74) Mandataire : **Moretti, René et al**
**c/o Cabinet BEAU DE LOMENIE**
**"Prado-Mermoz" 232, Avenue du Prado**
**F-13008 Marseille (FR)**

(54) **Machine pour couper des appareils métalliques cylindriques ou cylindro-coniques de grandes dimensions.**

(57)     La présente invention a pour objet une machine de coupe d'un appareil cylindrique ou cylindro-conique (1) caractérisée en ce qu'elle comporte un chariot d'avance (25) monté coulissant sur des moyens de guidage (25a) portés par un chariot de coupe (24) guidé par une piste circulaire fermée (21) coaxiale à l'enveloppe de l'appareil et fixée temporairement à celui-ci, lequel chariot de coupe (24 est soumis à l'action de moyens moteurs (4) pour l'entraîner autour de ladite enveloppe (1a/1b) selon une trajectoire orbitale et en ce que le chariot d'avance (25) de l'outil est soumis à l'aiction de moyens d'entrainement pour le déplacer vers le centre de l'appareil (1) selon une trajectoire rectiligne sensiblement perpendiculaire à l'axe longitudinal $XX_1$ de l'appareil, de telle sorte que sous l'action combinée desdits chariots (24, 25) et par la pénétration de l'outil dans le métal, une saignée est pratiquée dans ladite enveloppe sur la totalité de son épaisseur jusqu'à la séparation des parties d'enveloppe.

fig_1

EP 0 505 298 A1

La présente invention a pour objet une machine de coupe pour sectionner des appareils métalliques cylindriques ou cylindro-coniques de grandes dimensions.

Le secteur technique de l'invention est celui des machines-outils pour le travail des métaux.

Les appareils tels que les condenseurs, générateurs de vapeur ou similaires trouvant leur application sur des sites sensibles chimiques ou nucléaires par exemple sont soumis à des détériorations notamment à l'action d'ambiance corrosive qui tendent dans le temps à attaquer certaines de leurs parties, lesquelles, lorsqu'elles atteignent un certain degré de détérioration doivent être remplacées.

On connaît déjà des appareils pour couper des tubes, lesquels appareils entourent le tube et comportent des outils de coupe à déplacement radial. De tels appareils sont décrits dans les brevets US-A. 3.253,336 et US-A. 4.739,685.

L'objectif de la présente invention est une machine pour la coupe d'enceintes métalliques cylindriques ou coniques d'un diamètre allant par exemple de trois mètres à dix mètres dont l'enveloppe extérieure est de forte épaisseur jusqu'à par exemple cent vingt millimètres et pouvant comporter plusieurs enveloppes concentriques.

La coupe est réalisée par des outils de tour travaillant en tronçonnage desdites enveloppes de l'appareil.

Cet objectif est atteint par la machine de coupe selon l'invention d'un appareil cylindrique ou cylindro-conique comportant un chariot d'avance d'au moins un outil de coupe mis au contact de l'enveloppe cylindrique ou conique dudit appareil et des moyens de guidage dudit chariot, lequel chariot d'avance est monté sur des moyens de guidage portés par un chariot de coupe guidé par une piste circulaire fermée coaxiale à ladite enveloppe de l'appareil et fixée temporairement à celui-ci, lequel chariot de coupe est soumis à l'action de moyens moteurs pour l'entraîner autour de ladite enveloppe selon une trajectoire orbitale et en ce que le chariot d'avance de l'outil est soumis à l'action de moyens d'entraînement pour le déplacer vers le centre de l'appareil selon une trajectoire rectiligne sensiblement perpendiculaire à l'axe longitudinal $XX_1$ dudit appareil, dans laquelle ladite piste est délimitée par deux bords interne et externe concentriques comportant une gorge d'une section droite en V qui coopère avec des galets de guidage dudit chariot de coupe, lequel se déplace parallèlement à ladite piste et en ce que la machine comporte en outre un support annulaire relié au chariot de coupe et coaxial à ladite piste, lequel support comporte des galets de guidage qui coopèrent avec la gorge externe en V de la piste pour tourner autour de celle-ci en entraînant ledit chariot, lequel support comporte à sa périphérie une couronne d'entraînement qui coopère avec un pignon calé sur l'arbre d'un moteur fixé à ladite piste.

La couronne d'entraînement est constituée par une chaîne mécanique à rouleaux fixée à la périphérie externe dudit support annulaire.

La machine comporte des supports radiaux régulièrement répartis sur son périmètre pour la fixer à ladite enveloppe.

Le chariot d'avance est entraîné dans un sens ou dans l'autre par un dispositif vis/écrou dont l'écrou est fixé au chariot et la vis est montée dans des paliers fixés audit chariot et est calée sur l'arbre de sortie de moyens réducteurs dont le pignon d'entrée coopère avec un pignon calé sur l'arbre d'un moteur électrique. Ledit chariot de coupe comporte une génératrice de courant électrique sur l'axe de laquelle est calé un galet d'entraînement, et ladite génératrice est montée sur un support pivotant autour d'un axe parallèle audit chariot, lequel support s'étend au-delà du chariot et est soumis à l'action de moyens élastiques qui tendent à le faire pivoter vers ladite piste pour y appliquer ledit galet d'entraînement de la génératrice. Celle-ci est reliée audit moteur électrique du chariot d'avance, à travers un boîtier électronique de commande du sens de marche et de réglage de la tension appliquée audit moteur afin de commander la vitesse d'avance du chariot et la pénétration de l'outil dans le métal proportionnellement à la vitesse du chariot de coupe.

Dans son application où l'appareil comporte au moins deux enveloppes coaxiales, le chariot de coupe de la machine comporte un bras porte-outil monté pivotant pour se déplacer parallèlement audit chariot de coupe et dont l'axe de pivotement est situé sur un des cotés du chariot d'avance. L'outil dudit bras est mis au contact de l'enveloppe interne de l'appareil et la pénétration de l'outil dans le métal de l'enveloppe est obtenu par action du chariot d'avance sur la partie dudit bras située à l'opposé de l'axe de pivotement pour faire pivoter ledit bras vers ladite enveloppe.

Ledit bras adopte la forme générale d'une plaque triangulaire dont l'axe de pivotement est situé à la partie décroissante du bras, lequel comporte à l'opposé de ladite partie un tenon de guidage qui coopère avec le logement du chariot d'avance destiné à recevoir l'outil de coupe de l'enveloppe extérieure, l'épaisseur dudit tenon étant légèrement inférieure à la largeur dudit logement.

Dans un mode d'exécution où la découpe est réalisée dans un plan vertical et dans le but d'équilibrer l'ensemble tournant, la machine comporte un contrepoids diamétralement opposé au chariot de coupe, lequel contrepoids comporte des moyens de guidage pour coopérer avec les gorges en V de la piste circulaire et est relié audit support annulaire pour être entraîné de façon orbitale simultanément au chariot de coupe. Les moyens de guidage du contrepoids sont des galets, montés à rotation libre sur ledit contrepoids.

Le moteur de ladite couronne d'entraînement est fixé à un bras, articulé à une patte-support fixée à ladite piste, lequel bras comporte un support sur lequel est monté un rouleau-presseur mis au contact dudit support annulaire à l'opposé de la couronne d'entraînement et dont l'axe du rouleau est dans le plan de l'axe dudit moteur pour appliquer sur ledit support annulaire une force antagoniste à la composante radiale du couple fourni par ledit moteur et appliquée sur la couronne d'entraînement par ledit pignon.

Le résultat de l'invention est une machine-outil de coupe permettant la découpe des enveloppes d'un appareil métallique cylindrique ou cylindro-conique de grand diamètre ne pouvant être sectionnées par des machines-outils traditionnelles telles qu'un tour, du fait des grandes dimensions desdits appareils.

La machine selon l'invention permet de réaliser des coupes franches par saignées dans le métal au moyen d'outils de tour et avec une grande précision, ce qui garantit le raccordement précis de la partie neuve de l'appareil en vue de sa rénovation.

D'autres avantages et les caractéristiques de l'invention ressortiront encore à la lecture de la description suivante donnée à titre d'exemple non limitatif et en référence aux dessins annexés sur lesquels :

La figure 1 est une vue en coupe partielle d'un appareil cylindrique à fond conique et à deux enveloppes illustrant de façon schématique une machine selon l'invention en cours d'opération de découpage.

La figure 2 et une vue en coupe suivant la ligne II-II de la figure 1.

La figure 3 est une vue de dessus du chariot de coupe dans sa configuration avec son bras porte-outil pour le découpage de l'enveloppe interne.

La figure 4 est une vue en coupe suivant la ligne IV-IV de la figure 3.

La figure 5 est une vue en coupe du chariot d'avance illustrant le montage des outils de coupe de l'enveloppe extérieure.

La figure 6 est une vue de dessus à plus grande échelle de la génératrice de courant du moteur du chariot d'avance, avec son galet d'entraînement.

La figure 7 est une vue en élévation de la figure 8.

La figure 8 est un schéma électrique simplifié des moyens de commande du chariot d'avance, et de la pénétration des outils de coupe dans le métal des enveloppes.

La figure 9 est un schéma simplifié du boîtier de commande composant les moyens de la figure 8.

La figure 10 est une vue de dessus de l'entraînement de la couronne et du chariot de coupe.

La figure 11 est une vue en coupe suivant la ligne XI-XI de la figure 10.

La figure 12 est une vue à plus grande échelle donnant le détail des moyens de guidage de la couronne d'entraînement.

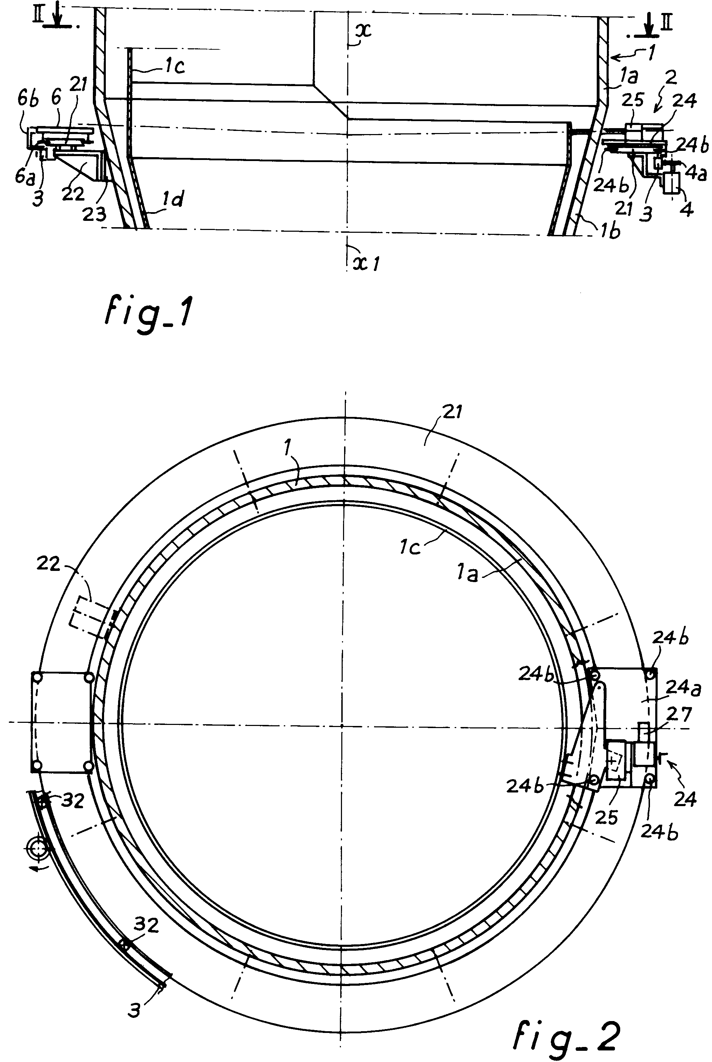

On se reporte d'abord aux figures 1 et 2 qui représentent de façon schématique l'ensemble de la machine selon l'invention dans sa configuration de coupe de l'enveloppe interne d'un appareil 1 représenté partiellement et comportant une enveloppe extérieure cylindrique la prolongée vers le bas par un fond conique 1b. Ledit appareil qui en l'occurrence est un générateur de vapeur comporte une enveloppe interne cylindrique 1c se prolongeant vers le bas par une partie conique 1d parallèle au fond 1b de l'appareil et coaxiale auxdites enveloppes 1a/1b.

La machine référencée 2 est fixée audit fond conique 1d où la découpe doit être réalisée.

Le dessin représente un exemple d'utilisation de la machine 2 pour le découpage de la partie conique 1b de l'appareil, il va de soi que la machine est également adaptée pour sectionner la partie cylindrique la dudit appareil. Le choix de la zone à découper étant fonction du degré de détérioration de l'appareil.

La machine 2 se compose d'une piste circulaire fermée 21 pouvant être réalisée en plusieurs secteurs assemblés les uns aux autres, laquelle piste est coaxiale aux enveloppes de l'appareil 1 et montée sur des supports 22 par exemple au nombre de 8 repartis sur son périmètre et fixés à la partie conique 1b par l'intermédiaire de cales 23 pour compenser la conicité de ladite partie 1b et maintenir la piste 21 dans un plan perpendiculaire à l'axe longitudinal $XX_1$ de l'appareil.

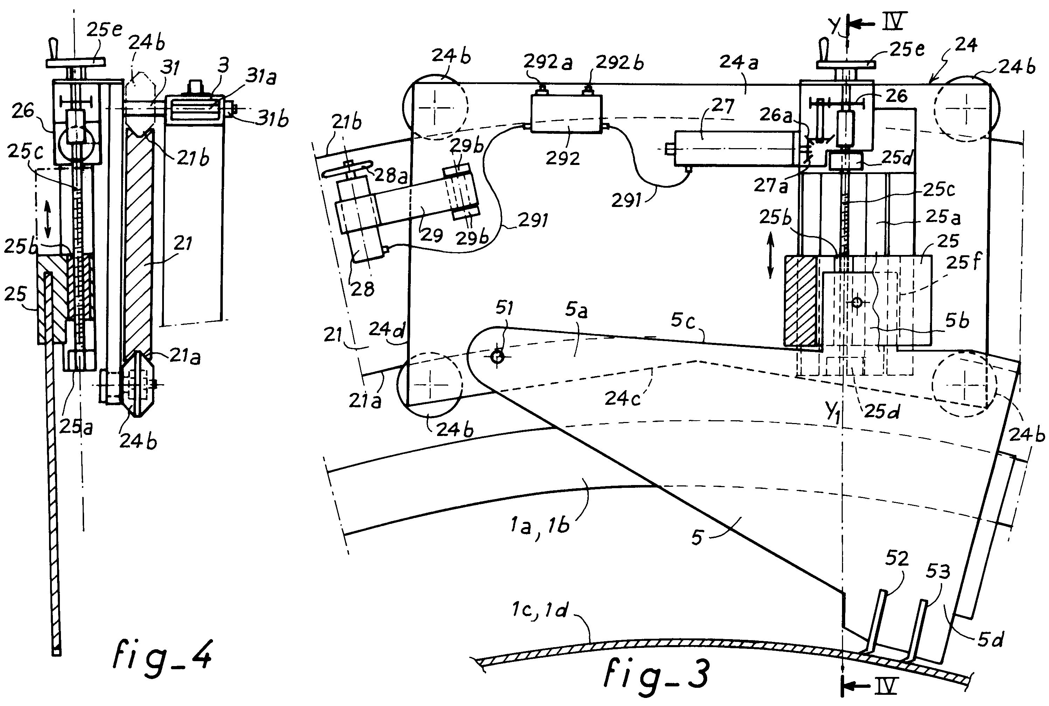

Les bords intérieur 21a et extérieur 21b de la piste 21 comportent une gorge d'une section droite en V par exemple à 90° qui constituent les rails de guidage du chariot de coupe 24 (figures 3 et 4).

Celui-ci se compose d'un plateau 24a adoptant une forme générale rectangulaire et comportant quatre galets 24b d'une section droite correspondant au profil des gorges 21a/ 21b de la piste pour coopérer avec celle-ci. Lesdits galets sont montés à rotation libre aux angles du plateau 24a et au-dessous de celui-ci sur des axes perpendiculaires audit plateau. Les quatre galets 24b sont tous au même niveau par rapport au plateau 24a de telle sorte que le chariot 24 se déplace parallèlement à la piste 21.

Le bord 24c du plateau est échancré suivant un angle obtus ou peut être en arc de cercle pour ménager un espace de sécurité entre le chariot et l'appareil et assurer le bon fonctionnement de la machine.

Ledit chariot de coupe 24 comporte vers une de ses extrémités, par exemple celle située à droite sur la figure 3, un chariot d'avance 25 porteur des outils de coupe, lequel est monté à la façon d'un tour parallèle sur une glissière d'une section droite en queue d'aronde 25a. Le chariot 25 comporte ainsi une coulisse en queue d'aronde complémentaire à ladite glissière 25a avec laquelle elle coopère, laquelle glissière s'étend sur la quasi largeur du plateau 24a du chariot de coupe 24.

Le déplacement du chariot d'avance dans un sens ou dans l'autre se produit sur une trajectoire rectiligne $YY_1$ perpendiculaire à l'axe longitudinal $XX_1$ de l'appareil 1.

L'entraînement dudit chariot d'avance 25 est réalisé de façon connue par un dispositif vis/écrou dont l'écrou 25b est fixé au chariot 25 et la vis 25c est montée sur deux paliers 25d fixés aux extrémités de la glissière 25a. Ladite vis 25c comporte à son extrémité située à l'extérieur du chariot un volant à manivelle 25e qui permet d'obtenir l'avance ou le recul du chariot de façon manuelle en cas de défaillance du système d'avance automatique qui va être décrit. Celui-ci se compose d'un réducteur de vitesse 26 sur l'arbre de sortie duquel est calée la vis 25c. L'entraînement du réducteur est obtenu par un moteur électrique 27 sur l'arbre duquel est calé un pignon conique 27a coopérant avec le pignon conique d'entrée 26a du réducteur 26.

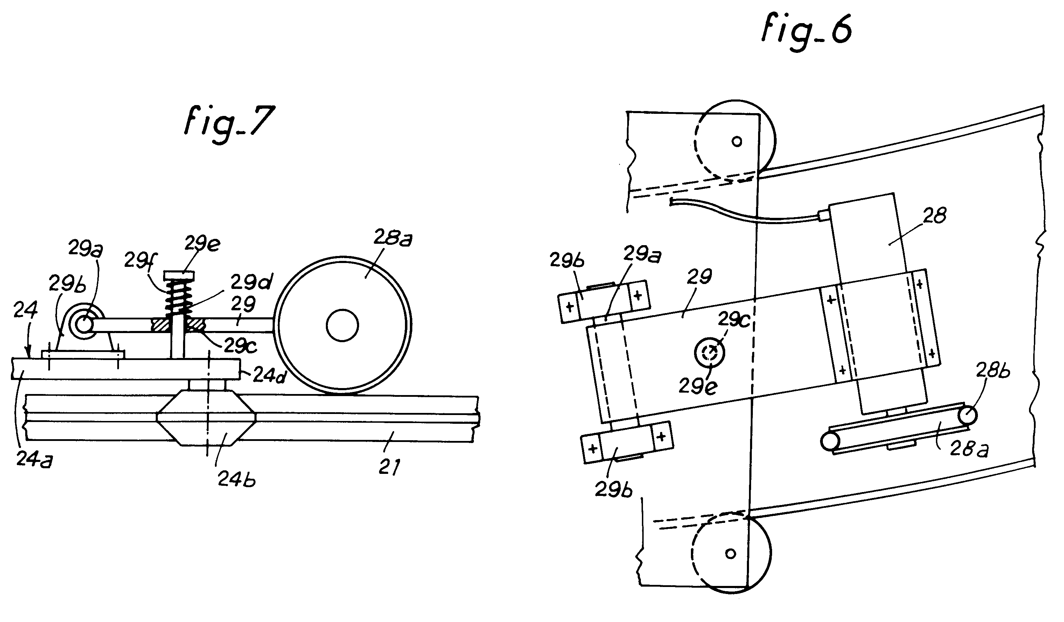

Le courant est fourni au moteur 27 par une génératrice 28 sur l'axe de laquelle est calé un galet d'entraînement 28a à bandage élastomère 28b (figure 6/7) mis au contact de la face supérieure de la piste 21. Ladite génératrice est montée sur un support pivotant 29 autour d'un axe 29a parallèle au plateau 24a du chariot de coupe 24 monté sur deux paliers 29b fixés audit plateau 24a. Le support 29 comporte un orifice 29c pour laisser le passage avec du jeu à une tige cylindrique 29d vissée perpendiculairement au plateau 24a et comportant une butée 29e à son extrémité libre. La pression du galet d'entraînement 28a sur la piste 21 est obtenue par un ressort de compression 29f inséré entre la butée 29e et le support 29. Les paliers 29b sont situés du côté du bord transversal 24d du chariot 24 de telle sorte que le support 29 s'étend au-delà dudit chariot. La génératrice 28 est dans une position transversale à la piste 21 et est parallèle à celle-ci. Elle est reliée par un fil à deux conducteurs 291 au moteur 27 du chariot d'avance 25 par l'intermédiaire d'un boîtier de commande 292 comportant un bouton de commande d'un potentiomètre 292a pour régler la vitesse du moteur 27 et un bouton 292b de marche/arrêt et de positionnement du sens de rotation du moteur 27 pour commander le déplacement du chariot d'avance dans un sens ou dans l'autre.

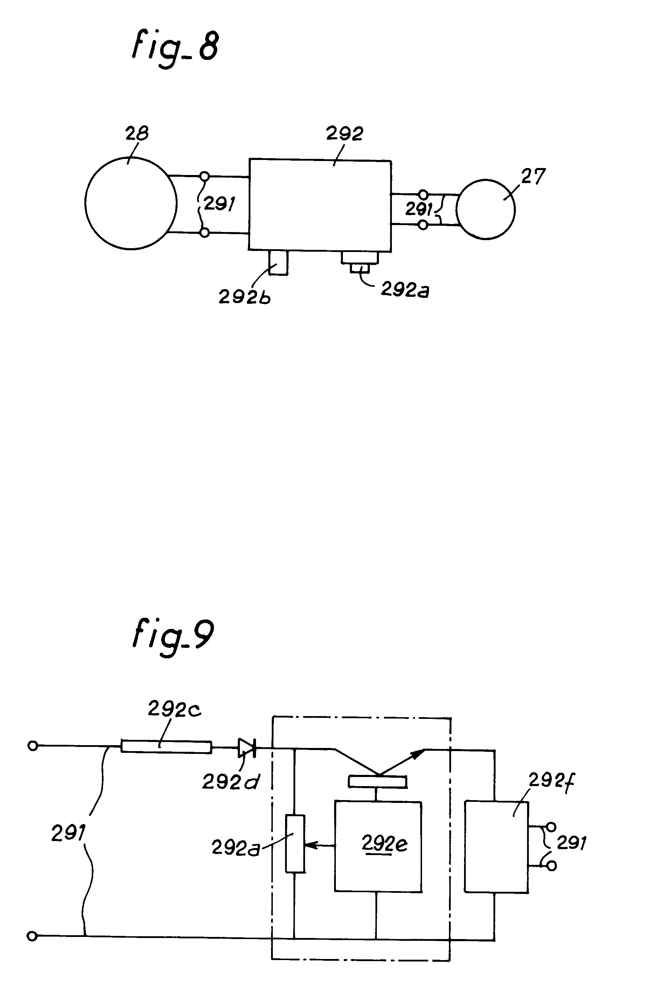

La figure 9 représente un schéma simplifié du montage électronique du boîtier 292, lequel se compose d'un fusible de protection 292c monté sur un conducteur 291 suivi d'une diode 292d reliée audit potentiomètre 292a en liaison avec une carte électronique 292e connectée à un inverseur 292f.

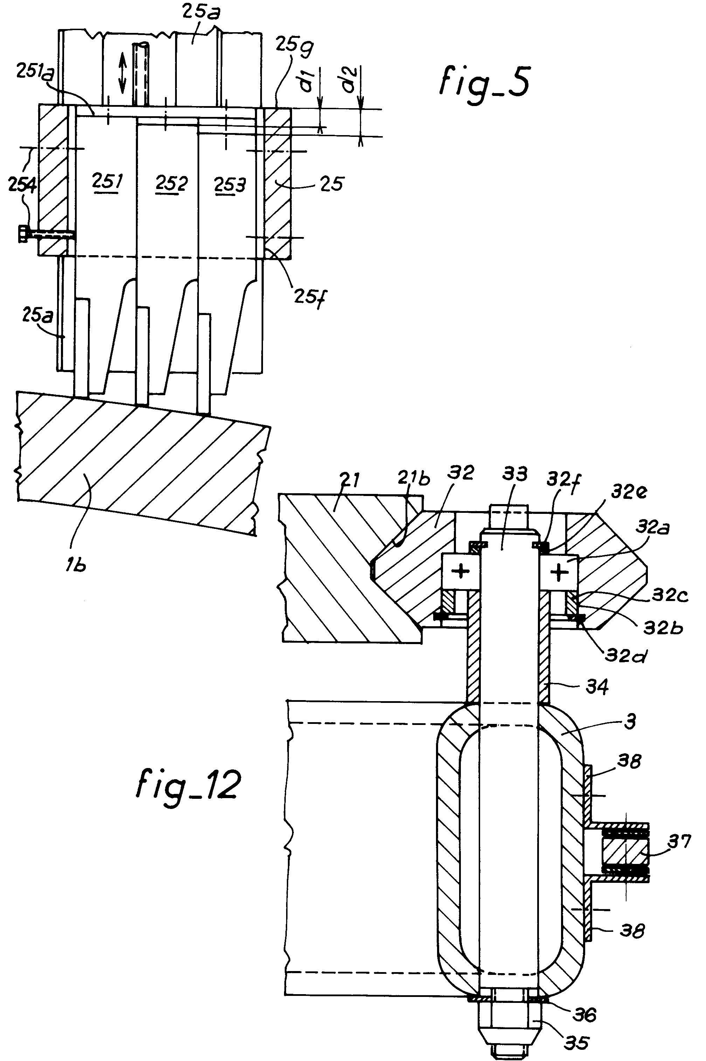

La figure 5 représente le chariot d'avance avec ses outils de coupe. Un seul outil pourrait être utilisé pour réaliser la découpe de l'enveloppe extérieure 1a/1b de l'appareil et/ou le dressage des parois de la coupe. Selon l'exemple illustré, trois outils sont montés dans un logement 25f d'une section droite rectangulaire de forme allongée qui traverse le chariot dans le sens de la longueur. Les trois outils sont décalés en longueur pour réaliser trois passes simultanées. L'outil 251 est engagé dans le logement 25f de telle sorte que son talon 251a se situe à une distance proche de la partie arrière 25g du chariot. L'outil 252 est décalé selon une distance $d_1$ par rapport à ladite partie 25g supérieure à la distance à laquelle est le premier outil 251. L'outil 253 est décalé selon une distance $d_2$ de la partie 25g supérieure à la distance $d_1$ à laquelle est l'outil 252. Le maintien en position desdits outils est réalisé au moyen de quatre vis de pression 254 en opposition deux à deux et disposées de part et d'autre des outils.

Ainsi monté le chariot de coupe 24 se déplace sur la piste 21 selon une trajectoire orbitale autour de l'appareil 1.

Le déplacement du chariot de coupe 24 est obtenu par une couronne d'entraînement montée sur un support annulaire 3 relié audit chariot 24.

Ledit support annulaire 3 est coaxial à la piste 21 est réalisé à partir d'un profilé tubulaire d'une section droite rectangulaire à angles arrondis et dont les cotés les plus longs sont disposés parallèlement à l'axe longitudinal de l'appareil. Le support 3 entoure la piste 21 et est relié de façon rigide au chariot de coupe 24 au moyen d'un bloc entretoise 31 à épaulement fixé perpendiculairement au-dessous dudit chariot et dont les tiges filetées 31a sont passées au travers du support et fixées à celui-ci au moyen d'écrous 31b.

Ledit support 3 est monté à roulement sur la piste pour tourner autour de celle-ci et comporte ainsi plusieurs galets de guidage 32, par exemple au nombre de 12, régulièrement répartis sur son périmètre. Ces galets 32 sont analogues à ceux 24b du chariot 24 pour coopérer avec la gorge en V 21b extérieure de la piste 21.

Le détail du montage du support annulaire 3 sur la piste 21 est représenté à la figure 12. Comme les autres galets 24b, les galets 32 sont montés de façon classique sur un roulement à billes 32a engagé dans un alésage central 32b coaxial au galet, le maintien en translation est réalisé au moyen d'une bague 32c et d'un jonc élastique 32d d'un côté du roulement et d'une rondelle 32 et d'un jonc 32e de l'autre, engagé dans une gorge périphérique réservée à l'extrémité d'un axe 33 passé à travers le profilé 3. Une entretoise 34 assure la position du galet 32 par rapport audit profilé 3. L'axe 33 comporte un épaulement à sa partie opposée à celle où est monté le galet 32 et sa fixation est réalisée par un écrou 35 serré contre une rondelle 36 en appui sur ledit support 3.

Celui-ci comporte à sa périphérie externe et au milieu de sa paroi une couronne d'entraînement constituée par une chaîne mécanique à rouleaux 37 fixée au support 3 au moyen d'équerres 38 vissées audit support et entourant celui-ci selon une boucle circulaire fermée.

La rotation du support annulaire 3 autour de la piste 21 entraîne le chariot de coupe 24 sur sa trajectoire orbitale autour de l'appareil à sectionner 1.

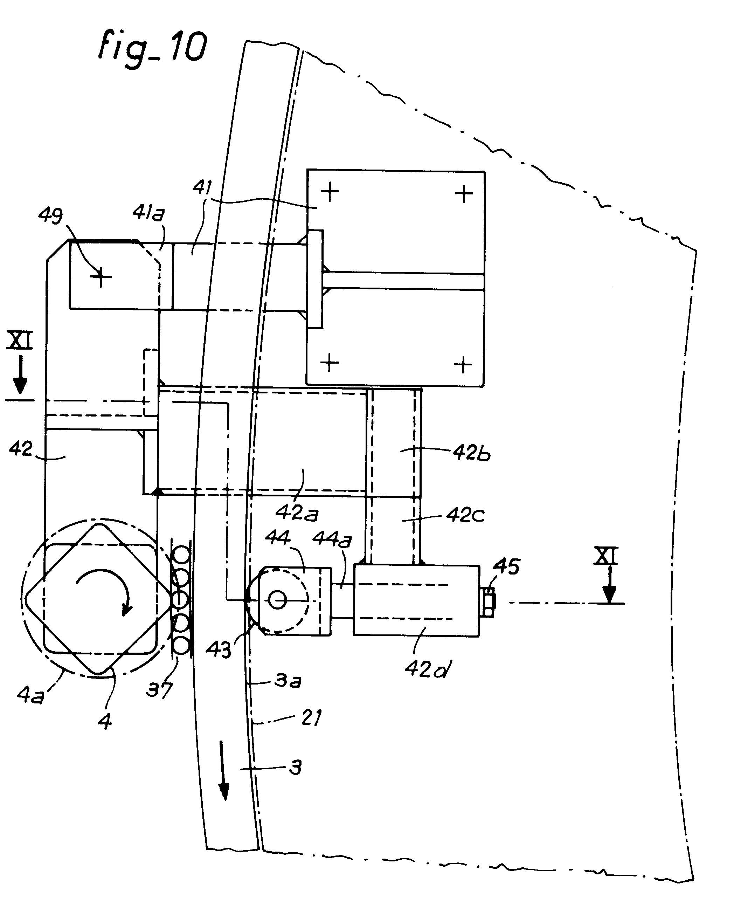

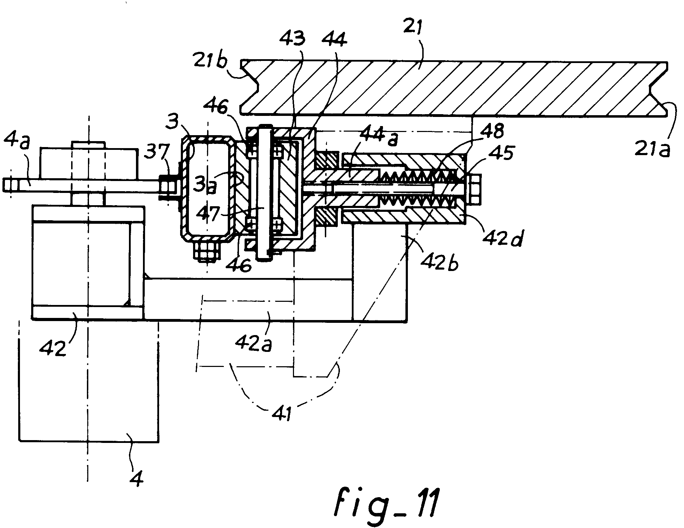

L'entraînement en rotation dudit support est obtenu par un moteur 4 sur l'axe duquel est calé un pignon 4a et dont les dents coopèrent avec ladite chaîne mécanique à rouleaux 27 constituant la couronne d'entraînement (figures 10 et 11).

Ledit moteur 4 est par exemple un moteur hydraulique et est relié à la piste 21 par une patte-support 41 vissée sous ladite piste.

L'extrémité libre de la patte-support 41 comporte une chape 41a dans laquelle est monté articulé un bras 42 autour d'un axe 49 parallèle à l'axe de révolution du support annulaire 3. Le moteur hydraulique 4 est fixé à l'extrémité dudit bras 42 et est parallèle audit axe d'articulation 43. Dans cette position du moteur 4 le pignon 4a est perpendiculaire à la chaîne d'entraînement 37. Sur ledit bras 42 est soudé un support 42a perpendiculaire audit bras 42 et s'étendant vers la piste 21 et au-dessous du support annulaire 3. Ledit support 42a adopte la forme d'un L dont l'extrémité supérieure 42b se place sensiblement en regard de la face périphérique interne 3a du support annulaire 3.

A l'extrémité 42b est fixée une patte 42c à laquelle est soudé un boîtier 42d dans lequel est monté un équipage comportant un rouleau-presseur 43 libre en rotation et venant au contact de la face 3a du support annulaire 3.

Ledit rouleau 43 est monté dans une chape 44 dans laquelle est vissée une vis 45 coaxiale au boîtier 42d. La chape 44 comporte un prolongement cylindrique 44a monté à coulissement juste, dans ledit boîtier 42d. L'alésage du boîtier 42d est rainuré pour recevoir des ergots liés audit prolongement 44a dans le but d'empêcher la rotation de la chape dans ledit boîtier.

Le rouleau 43 est monté en rotation libre sur deux roulements à billes 46 et d'un axe 47 parallèle à l'axe de révolution du support annulaire 3.

L'espace 42 compris entre le prolongement 44a et le fond du boîtier 42d comporte un empilement de rondelles élastiques coniques 48 dites "rondelles Belleville" qui exercent une pression sur la chape 44 et corrélativement sur le rouleau 43. Le rouleau-presseur 43 et le moteur hydraulique 4 sont dans un même plan.

Ledit rouleau-presseur 43 a pour effet d'appliquer sur ledit support annulaire 3 une force antagoniste à la composante radiale F du couple fourni par ledit moteur hydraulique 4 et appliquée sur ladite chaîne à rouleaux 37 par le pignon 4a.

Pour la découpe de l'enveloppe interne 1c de l'appareil, le dispositif comporte un bras porte-outil amovible 5 que l'on monte à cette fin autour d'un axe de pivotement 51 fixé au plateau 24a du chariot de coupe 24. Ledit bras porte-outil 5 est d'une forme générale triangulaire et est réalisé à partir d'une plaque métallique. L'axe 51 est situé sur le côté du chariot d'avance 25 (à gauche sur la figure 3) et est rapproché de l'extrémité 24d du chariot de coupe. Par rapport au bras 5, l'axe 51 est situé dans la partie décroissante 5a dudit bras, lequel comporte à l'opposé de ladite partie 5a un tenon de guidage 5b engagé libre dans le logement 25f destiné au montage des outils de coupe de l'enveloppe extérieure 1a/1b.

Ledit tenon 5b est d'un contour rectangulaire et s'étend dans le plan du bras 5 et sur le coté de son bord 5c.

Les outils de coupe 52/53, par exemple au nombre de deux, sont montés à l'opposé dudit tenon 5b pour s'étendre dans le plan du bras dans la partie élargie 5d de celui-ci.

Dans le but d'équilibrer la machine dans le cas où l'appareil 1 est en position horizontale et le plan de coupe vertical, la machine comporte un contrepoids 6, lequel est monté à roulement sur la piste 21 de la même façon que le chariot de coupe 24, sur des galets 6a analogues à ceux 24b dudit chariot 24. Ledit contrepoids 6 se déplace parallèlement et au-dessus de la piste 21, est diamétralement opposé au chariot de coupe 24 et est relié rigidement par une patte 6b audit support annulaire 3.

Le déplacement du chariot de coupe 24 sur la piste 21 est obtenu par le moteur hydraulique 4. Pour la découpe de l'enveloppe extérieure 1a/1b, le bras porte-outil 5 est démonté du chariot 24. Les outils de coupe 251/252/253 sont montés dans le chariot d'avance 25 et mis au contact de l'enveloppe extérieure. La mise en pression d'un circuit hydraulique relié au moteur 4 entraîne sa rotation et corrélativement la rotation du support annulaire 3 par la coopération du pignon 4a et de la couronne constituée par la chaîne mécanique 37.

Le support annulaire 3 entraîne le déplacement orbital du chariot de coupe 24 autour de l'appareil.

Au cours du déplacement du chariot 24, la génératrice 28 entraînée par son galet 28a mis au contact de la piste 21 fournit un courant dont la tension est proportionnelle à la vitesse du chariot de coupe 24. Ce courant alimente le moteur 27 du chariot d'avance 25. Le boîtier électronique 292 permet de moduler le courant produit par la génératrice 28 et de faire varier la vitesse d'avance du chariot 25 dans une plage de 1 à 10 par action sur le potentiomètre 292a.

Le bouton 292a permet de commander la marche avant, la marche arrière ou l'arrêt du chariot d'avance 25.

Ce dispositif permet de régler la vitesse d'avance du chariot 25 en continu et de faire varier la vitesse de coupe sans changer la section du copeau.

Par ailleurs, toutes irrégularités de la vitesse de coupe n'ont aucune influence sur la régularité de l'avance en pénétration des outils.

Lorsque l'enveloppe extérieure 1a/1b est sectionnée, on place le bras porte-outil 5 sur le chariot de coupe 24, on le passe à travers la saignée précédemment réalisée et on procède de même sur l'enveloppe interne 1c/1d après avoir mis les outils 52/53 au contact de ladite enveloppe.

La pénétration des outils dans l'enveloppe 1c/1d est obtenue par la poussée du chariot d'avance 25 exercée sur le bras porte-outil 5 tel que cela a été précédemment décrit.

## Revendications

1. Machine de coupe d'un appareil cylindrique ou cylindro-conique (1) comportant un chariot d'avance (25) d'au moins un outil de coupe mis au contact de l'enveloppe cylindrique (1a) ou conique (1b) dudit appareil et des moyens de guidage dudit chariot, lequel chariot d'avance est monté sur des moyens de guidage (25a) portés par un chariot de coupe (24) guidé par une piste circulaire fermée (21) coaxiale à ladite enveloppe (1a/1b) de l'appareil et fixée temporairement à celui-ci, lequel chariot de coupe (24) est soumis à l'action de moyens moteurs (4) pour l'entraîner autour de ladite enveloppe (1a/1b) selon une trajectoire orbitale et en ce que le chariot d'avance (25) de l'outil est soumis à l'action de moyens d'entraînement (25e/28/27) pour le déplacer vers le centre de l'appareil (1) selon une trajectoire rectiligne sensiblement perpendiculaire à l'axe longitudinal $XX_1$ dudit appareil, caractérisée en ce que ladite piste (21) est délimitée par deux bords interne (21a) et externe (21b) concentriques comportant une gorge d'une section droite en V qui coopère avec des galets de guidage (24b) dudit chariot de coupe (24), lequel se déplace parallèlement à ladite piste (21) et en ce que la machine comporte en outre un support annulaire (3) relié au chariot de coupe (24) et coaxial à ladite piste (21), lequel support (3) comporte des galets de guidage (32) qui coopèrent avec la gorge externe (21b) en V de la piste (21) pour tourner autour de celle-ci en entraînant ledit chariot (24), lequel support (3) comporte à sa périphérie une couronne d'entraînement (37) qui coopère avec un pignon (4a) calé sur l'arbre d'un moteur (4) fixé à ladite piste (21).

2. Machine selon la revendication 1, caractérisée en ce que la couronne d'entraînement (37) est constituée par une chaîne mécanique à rouleaux fixée à la périphérie externe dudit support annulaire (3).

3. Machine selon l'une quelconque des revendications 1 et 2, caractérisée en ce que ladite piste (21) comporte des supports radiaux (22) régulièrement répartis sur son périmètre pour la fixer à ladite enveloppe (1a/1b).

4. Machine selon l'une quelconque des revendications 1 à 3 dont le chariot d'avance (25) est entraîné dans un sens ou dans l'autre par un dispositif vis/écrou dont l'écrou (25b) est fixé au chariot (25) et la vis (25c) est montée dans des paliers (25d) fixés audit chariot et est calée sur l'arbre de sortie de moyens réducteurs (26) dont le pignon d'entrée (26a) coopère avec un pignon (27a) calé sur l'arbre d'un moteur électrique (27), caractérisée en ce que le chariot de coupe (24) comporte une génératrice de courant électrique (28) sur l'axe de laquelle est calé un galet d'entraînement (28a), en ce que ladite génératrice (28) est montée sur un support (29) pivotant autour d'un axe parallèle audit chariot (24), lequel support (29) s'étend au-delà du chariot (24) et est soumis à l'action de moyens élastiques (29f) qui tendent à le faire pivoter vers ladite piste (21) pour y appliquer ledit galet d'entraînement (28a) de la génératrice (28), laquelle est reliée audit moteur électrique (27) du chariot d'avance (25), à travers un boîtier électronique (292) de commande du sens de marche et de réglage de la tension appliquée audit moteur (27) afin de commander la vitesse d'avance du chariot (25) et la pénétration de l'outil dans le métal, proportionnellement à la vitesse du chariot de coupe (24).

5. Machine selon l'une quelconque des revendications 1 à 4 dont l'appareil comporte au moins deux enveloppes coaxiales (1a/1b - 1c/1d) caractérisée en ce que le chariot de coupe (24) comporte un bras porte-outil (5) monté pivotant pour se déplacer parallèlement audit chariot de coupe (24) et dont l'axe de pivotement (51) est situé sur un des cotés du chariot d'avance (25) en ce que l'outil dudit bras (5) est mis au contact de l'enveloppe interne (1c/1d) de l'appareil et que la pénétration de l'outil dans le métal de l'enveloppe est obtenu par action du chariot d'avance (25) sur la partie dudit bras (5d) située à l'opposé de l'axe de pivotement (51) pour faire pivoter ledit bras vers ladite enveloppe (1c/1d).

6. Machine selon la revendication 5 caractérisée en ce que ledit bras (5) adopte la forme générale d'une plaque triangulaire dont l'axe de pivotement (51) est situé à la partie décroissante du bras, lequel comporte à l'opposé de ladite partie un tenon de guidage (5b) qui coopère avec le logement (25f) du chariot d'avance (25) destiné à recevoir l'outil de coupe de l'enveloppe extérieure (1a/1b), l'épaisseur dudit tenon (5b) étant légèrement inférieure à la largeur dudit logement.

7. Machine selon l'une quelconque des revendications 1 à 6 caractérisée en ce qu'elle comporte un contrepoids (6) diamétralement opposé au chariot de coupe (24), lequel contrepoids (6) comporte des moyens de guidage (6a) pour coopérer avec les gorges en V (21a/21b) de la piste circulaire (21) et est relié audit support annulaire (3) pour être entraîné de façon orbitale simultanément au chariot de coupe (24).

8. Machine selon la revendication 7 caractérisée en ce que les moyens de guidage du contrepoids (6) sont des galets (6a), montés à rotation libre sur ledit contrepoids.

9. Machine selon l'une quelconque des revendications 1 à 8 caractérisée en ce que le moteur (4) de ladite couronne d'entraînement (3) est fixé à un bras (42), articulé à une patte-support (41) fixée à ladite piste (21), lequel bras (42) comporte un support (42a) sur lequel est monté un rouleau-presseur (43) mis au contact dudit support annulaire (3) à l'opposé de la couronne d'entraînement (37) et dont l'axe du rouleau (43) est dans le plan de l'axe dudit moteur (4) pour appliquer sur ledit support annulaire (3) une force antagoniste à la composante radiale (F) du couple fourni par ledit moteur (4) et appliquée sur la couronne d'entraînement par ledit pignon (4)

fig_1

fig_2

fig_4

fig_3

EP 0 505 298 A1

fig_5

fig_12

fig_7

fig_6

29a
29b
29f
29e
24
29d
29
28a
29c
24d
24a
24b
21

29b
29a
29
28
29c
29e
28b
28a

EP 0 505 298 A1

fig_8

28    292    27

291    292    291

292b    292a

fig_9

292c

292d

291    292a    292e    292f    291

fig_10

fig_11

Office européen
des brevets

**RAPPORT DE RECHERCHE EUROPEENNE**

Numero de la demande

EP    92 43 0005

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A,D | US-A-3 253 336 (BROWN)<br>* colonne 1, ligne 71 – colonne 3, ligne 64; figures 1-4 *<br><br>--- | 1-3,7,8 | B23B3/26<br>B23Q9/00 |
| A,D | US-A-4 739 685 (RICCI)<br>* colonne 2, ligne 54 – colonne 6, ligne 54; figures 1-4 *<br><br>----- | 1-3,7,8 | |

**DOMAINES TECHNIQUES RECHERCHES (Int. Cl.5)**

B23B
B23Q

Le présent rapport a été établi pour toutes les revendications

| Lieu de la recherche | Date d'achèvement de la recherche | Examinateur |
|---|---|---|
| LA HAYE | 18 JUIN 1992 | BOGAERT. F.L. |

EPO FORM 1503 03.82 (P0402)